# EUROPÄISCHE PATENTSCHRIFT

(11) **EP 0 574 912 B1**
(45) Veröffentlichungstag und Bekanntmachung des Hinweises auf die Patenterteilung: **07.01.1999**
(21) Anmeldenummer: 93109691.1
(22) Anmeldetag: 17.06.1993
(51) Int. Cl.: C07F 7/12

(54) **Verfahren zur Gewinnung von Methylchlorsilanen aus hochsiedenden Rückständen der Methylchlorsilansynthese**
Process for the preparation of methylchlorosilanes from the high-boiling residue obtained through this direct process
Procédé pour la préparation de méthylchlorosilanes à partir du résidu à point d'ébullition élevée obtenue par le procédé direct

(30) Priorität: 19.06.1992 DE 4220151
(43) Veröffentlichungstag der Anmeldung: 22.12.1993
(73) Patentinhaber: Wacker-Chemie GmbH, 81737 München (DE)
(72) Erfinder: Pachaly, Bernd, Dr., D-8263 Burghausen (DE); Schinabeck, Anton, D-8263 Burghausen (DE)

(56) Entgegenhaltungen:
- EP-A- 0 155 626
- FR-A- 1 093 399
- FR-A- 2 163 579
- US-A- 2 709 176

## Beschreibung

Die Erfindung betrifft ein Verfahren zur Gewinnung von Methylchlorsilanen aus hochsiedenden Methylchlordisilanen. Die Methylchlordisilane entstehen als Nebenprodukte bei der Direktsynthese von Methylchlorsilanen.

Bei der Direktsynthese von Methylchlorsilanen aus Silicium und Methylchlorid bei 250 bis 300°C mit Kupferkatalysatoren entstehen neben den Methylchlorsilanen der allgemeinen Formel MeₓSiCl₄₋ₓ, wobei x die Werte 0 bis 4 hat, auch verschiedene Hydrogensilane und hochsiedende Nebenprodukte, hauptsächlich Methylchlordisilane der allgemeinen Formel MeₓSi₂Cl₆₋ₓ, wobei x Werte 2 bis 5 hat.

Die Methylchlorsilane werden mittels Destillation getrennt und gereinigt. Dabei fällt eine Hochsiederfraktion an, die 5 bis 10 % des Rohprodukts ausmacht. Es ist aus ökonomischen und ökologischen Gründen erwünscht, diese Rückstände aufzuarbeiten und Wertstoffe zu gewinnen. Dieses wird erreicht, indem die destillierbaren Methylchlordisilane isoliert und mit Chlorwasserstoff zu Methylchlorsilanen gespalten werden. In der Regel wird diese Spaltung mit Aminkatalysatoren in der Flüssigphase durchgeführt. Die Rückstandsaufarbeitung ist u. a. in W. Noll, 2. Auflage 1968, Verlag Chemie, Weinheim, Kapitel 2.2.8, beschrieben. Die chemischen Eigenschaften der Disilane und Grundlagen zur Spaltung sind beschrieben in R. Calas et al., J. Organomet. Chem., 225 (1982) 117 - 130.

Üblicherweise wird die Aufarbeitung der Hochsiederfraktion mittels einer diskontinuierlichen Destillation durchgeführt, um die Fraktion der mit Chlorwasserstoff spaltbaren Methylchlordisilane zu gewinnen. Bei dieser Destillation fallen folgende Fraktionen an:

| Siedebereich | Hauptkomponenten |
|---|---|
| 70 - 140°C Fraktion 1 | Dimethyldichlorsilan |
| | Ethylmethyldichlorsilan |
| | Methylpropyldichlorsilan |
| | Ethyldimethylchlorsilan |
| | Methylchlordisilane |
| | Kohlenwasserstoffe |
| | |
| 140 - 155°C Fraktion 2 | Pentamethylchlordisilan |
| | Tetramethyldichlordisilan |
| | Trimethyltrichlordisilan |
| | Dimethyltetrachlordisilan |
| | |
| 155 - 160°C Fraktion 3 | Trimethyltrichlordisilan |
| | Dimethyltetrachlordisilan |
| | |
| > 160°C Fraktion 4 | Oligomethylsilane, auch Dimethyltetrachlordisilan |
| | Carbosilane |
| | Siloxane |
| | Metalle und Metallhalogenide |

Mit Chlorwasserstoff spaltbar zu Monosilanen nach der Gleichung 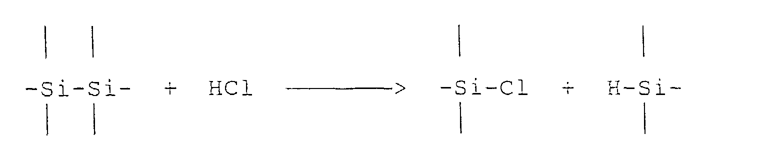 sind nur Methylchlordisilane, die mindestens zwei Chloratome an einem Siliciumatom aufweisen, d.h. nicht das symmetrische Tetramethyldichlordisilan oder Pentamethylchlordisilan.

Durch die Spaltung entsteht das Spaltsilan, welches hauptsächlich Dimethyldichlorsilan, Methyltrichlorsilan und Methyldichlorsilan enthält.

Die Spaltung der spaltbaren Disilane der Fraktion 3 erfolgt in Reaktionsbehältern, die eine Abtrennung des Spaltproduktgemisches ermöglichen, beispielsweise in einer Destillationsblase mit aufgesetzter Kolonne. Dabei wird das Spaltsilan über Kopf der Kolonne abgetrennt, nichtspaltbare Komponenten des zugespeisten Disilangemisches reichern sich in dem Reaktionsgemisch an und zwingen zur regelmäßigen Ausschleusung des Reaktorinhalts.

Die Fraktionen der Aufarbeitung der hochsiedenden Rückstände, die kein oder zu wenig spaltbare Disilane enthalten, insbesondere Fraktion 4, wie auch der auszuschleusende Rückstand der Disilanspaltung, der noch spaltbare Disilane enthält, müssen einer Rückstandsverbrennung zugeführt werden.

In US-A-2,709,176 ist ein Verfahren zur Spaltung von Disilanen mittels HCl und tertiären Amin-Katalysatoren beschrieben. Das zur Spaltung eingesetzte Silangemisch enthält auch Nebenprodukte, die leichter flüchtig sind als die spaltbaren Methylchlordisilane und höher als die spaltbaren Methylchlordisilane siedende Verbindungen.

In FR-A-1.093.399 ist kontinuierliches Verfahren zur Spaltung von Methylchlordisilanen in einem Silangemisch mittels HCl in der Gasphase mit sowohl leichter als auch schwerer als die spaltbaren Methylchlordisilane flüchtigen Verbindungen beschrieben.

Der vorliegenden Erfindung liegt die Aufgabe zugrunde, ein Verfahren zur Gewinnung von Methylchlorsilanen aus hochsiedenden Rückständen der Methylchlorsilansynthese bereitzustellen, bei dem die spaltbaren Methylchlordisilane kontinuierlich gespalten werden können und bei dem eine höhere Ausbeute an Spaltsilanen erzielt werden kann.

Die Erfindung betrifft ein Verfahren zur Gewinnung von Methylchlorsilanen aus hochsiedenden Rückständen der Methylchlorsilansynthese, wobei in den Rückständen vorhandene spaltbare Methylchlordisilane, welche mindestens zwei Chloratome an einem Siliciumatom aufweisen, mit Chlorwasserstoff in Gegenwart eines im Reaktionsgemisch verbleibenden Katalysators gespalten werden, wobei die Spaltung der Methylchlordisilane in Gegenwart der leichter als die spaltbaren Methylchlordisilane flüchtigen Nebenprodukte der hochsiedenden Rückstände der Methylchlorsilansynthese, die einen Siedepunkt von mindestens 70°C bei Normalbedingungen aufweisen, abläuft und wobei die leichterflüchtigen Nebenprodukte kontinuierlich zusammen mit den Methylchlorsilanen und den nicht spaltbaren Methylchlordisilanen aus dem Reaktionsgemisch entfernt werden, dadurch gekennzeichnet, daß alle schwerer als die spaltbaren Methylchlordisilane siedenden Verbindungen vor der Spaltung abgetrennt werden und daß die Spaltung kontinuierlich erfolgt.

Die wichtigsten der leichter als die spaltbaren Methylchlordisilane flüchtigen Nebenprodukte der hochsiedenden Rückstände der Methylchlorsilansynthese, die einen Siedepunkt von mindestens 70°C bei Normalbedingungen aufweisen, sind in den vorstehend angegebenen Fraktionen 1 und 2 aufgeführt. Weitere derartige Nebenprodukte, die ebenfalls in einem Siedebereich von 70 bis 155 °C destillierbar sind, fallen in geringen Mengen an.

Die Anwesenheit der in den hochsiedenden Rückständen vorhandenen Methylchlorsilane, leichter als die spaltbaren Methylchlordisilane flüchtigen Nebenprodukte und nichtspaltbaren Methylchlordisilane stört die Spaltung nicht. Deshalb ist die bisher übliche Auftrennung der hochsiedenden Rückstände zur Gewinnung einer Fraktion, die im wesentlichen nur spaltbare Methylchlordisilane enthält (Fraktion 3) nicht erforderlich. Durch kontinuierliches Entfernen aller leichter als die spaltbaren Methylchlordisilane siedenden Verbindungen aus dem Reaktionsgemisch kann die Spaltung kontinuierlich betrieben werden, da alle schwerer als die spaltbaren Methylchlordisilane und der Katalysator siedenden Verbindungen (Fraktion 4) vor der Spaltung abgetrennt werden.

Als im Reaktionsgemisch verbleibende Katalysatoren für die Spaltung von Methylchlordisilanen mit Chlorwasserstoff kommen wenig flüchtige homogene oder heterogene an sich bekannte Katalysatoren in Frage. Beispiele sind Übergangsmetallkomplexe, wie (Me₂PhP)₂PdCl₂, (Ph₃P)₂NiCl₂, und (Ph₃P)₄Pd(0) und die bevorzugten organischen Stickstoffverbindungen, wie N-Methyl-2-pyrrolidon, Polyvinylpyrrolidon, alkylierte Säureamide und tertiäre Amine.

Besonders bevorzugte Katalysatoren sind tertiäre Amine, die mindestens einen gegebenenfalls mit Fluor- oder Chloratomen oder C₁₋₆-Alkylresten substituierten Arylrest mit vorzugsweise bis zu 18 Kohlenstoffatomen, wie den Phenyl-, Naphthyl- oder p-Tolylrest aufweisen, wobei gegebenenfalls am Stickstoffatom vorhandene Alkylreste, die mit Fluor- oder Chloratomen substituiert sein können, vorzugsweise bis zu 18 Kohlenstoffatome aufweisen. Bevorzugte Beispiele sind Tributylamin und N,N-Dimethylanilin.

Die Vorteile des erfindungsgemäßen Verfahrens werden nachstehend durch eine Gegenüberstellung eines bekannten Verfahrens zur Aufarbeitung von hochsiedenden Rückständen der Methylchlorsilansynthese und eine bevorzugte Ausführungsform des erfindungsgemäßen Verfahrens erläutert.

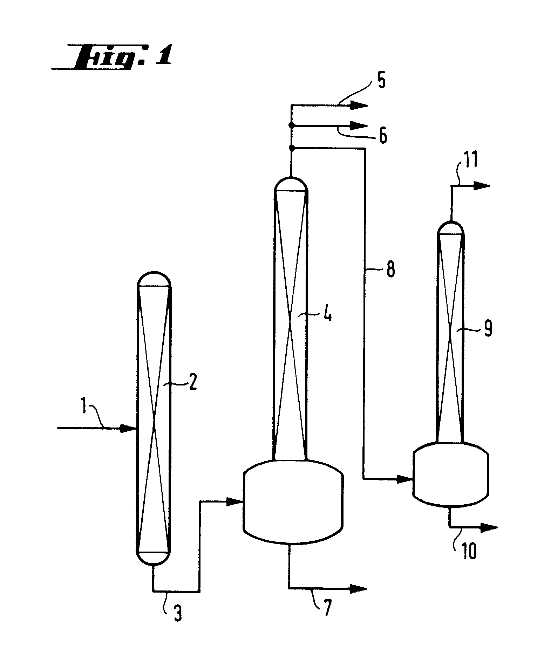

Fig.1 zeigt ein bekanntes Verfahren:

Über Leitung (1) wird das Rohsilangemisch aus der Umsetzung von Silicium mit Methylchlorid in Kolonne (2) überführt. In Kolonne (2) fallen die hochsiedenden Rückstände (Hochsieder) an. Dieser Hochsieder wird über Leitung (3) in die Kolonne (4) überführt.

Der Hochsieder enthält aufgrund der geforderten Hochsiederfreiheit des Kopfproduktes der Kolonne (2) einen relativ hohen Anteil an dem wertvollen Zielprodukt der Direktsynthese, dem Dimethyldichlorsilan. Der Hochsieder wird nun in Kolonne (4) diskontinuierlich aufdestilliert. Dabei fallen in den Leitungen 5, 6 bzw. 7 die vorstehenden Fraktionen 1, 2 bzw. 4 als Abfallströme an, wobei nicht nur Dimethyldichlorsilan verloren geht, sondern auch ein bedeutender Anteil der spaltbaren Disilane. Fraktion 3 wird über Leitung (8) dem Disilan-Spaltreaktor (9) zugeführt und dort mit Chlorwasserstoff unter Zugabe eines Aminkatalysators gespalten.

Nichtspaltbare Bestandteile in Fraktion 3 müssen aus dem Reaktor (9) regelmäßig über Leitung 10 augeschleust werden und stellen ebenfalls ein Abfallprodukt dar. Das Spaltsilan wird über die Kolonne des Reaktors (9) und Leitung (11) abgetrennt und dem Rohsilan aus der Direktsynthese wieder zugeführt.

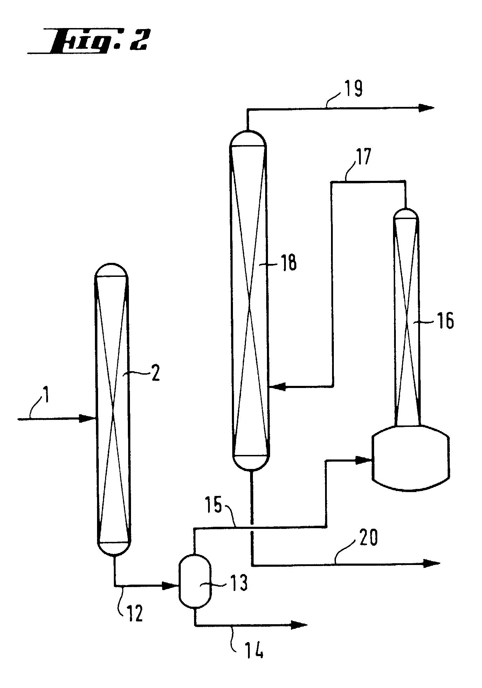

Fig. 2 zeigt das erfindungsgemäße Verfahren:

Über Leitung (1) wird das Rdhsilangemisch in Kolonne (2) überführt. Dort wird der Hochsiederanteil abgetrennt und über Leitung (12) einem kontinuierlich betriebenen Verdampfer (13), in dem Fraktion 4 über Leitung (14) abgetrennt wird, über Leitung (15) dem Disilanspaltreaktor (16) zugeführt. Hier werden alle spaltbaren Disilane gespalten, die nichtspaltbaren Disilane und anderen Bestandteile der Fraktionen 1 und 2 werden mit dem Spaltsilan über Kopf der Kolonne abgetrennt und über Leitung (17) der Destillationskolonne (18) zugeführt. In Kolonne (18) wird das Spaltsilan über Kopf getrennt und über Leitung (19) dem Rohsilangemisch zugeführt. Über den Sumpf und Leitung (20) werden Fraktionen 1 und 2 ausgeschleust.

Wesentliche Merkmale dieses Verfahrens sind
- eine scharfe destillative Trennung, die großen Energie- und Investitionsaufwand erfordert, kann entfallen
- eine thermische Belastung mit langer Verweilzeit, wie bei der diskontinuierlichen Hochsiederdestillation, wird deutlich vermindert, Nebenreaktionen werden unterdrückt
- der mit dem Hochsieder zwangsläufig mitgehende Anteil des wertvollen Zielproduktes Dimethyldichlorsilan verbleibt im Spaltsilan und geht nicht verloren
- die in den Fraktionen 1, 2 und 4 enthaltenen Anteile spaltbarer Disilane werden vollständig gespalten und gehen nicht verloren
- Kolonne (18) und Spaltreaktor (16) können kontinuierlich betrieben werden, die Kapazitäten steigen entsprechend
- der Anfall nichtverwertbarer Abfälle wird wesentlich vermindert.

Die Durchführung der Spaltung der Methylchlordisilane im Spaltreaktor (9) wird nachstehend erläutert:

### Beispiel 1 (nicht erfindungsgemäß)

In den Spaltreaktor mit 5000 l Inhalt werden bei 120°C Sumpftemperatur und 80°C Kopftemperatur bei 0,15 MPa (abs.) am Kolonnenkopf bei 1000 l/h Rücklauf 700 kg/h eines Gemisches aus 7 % Tetramethyldichlordisilan, 46,5 % Trimethyltrichlordisilan und 46,5 % Dimethyltetrachlordisilan eingespeist. Dem Reaktor wurden zu Beginn des Versuches 50 kg Tributylamin zugesetzt. HCl-Gas wird so zudosiert, daß eine geringe Abgasmenge entsteht, ca. 110 kg/h. Als Destillat werden 760 kg/h Spaltsilan mit 45 % Methyldichlorsilan, 28 % Methyltrichlorsilan und 27 % Dimethyldichlorsilan erhalten. Nach 100 h ist der Reaktor mit nichtspaltbaren Anteilen gefüllt und der Versuch muß abgebrochen werden.

### Beispiel 2 (erfindungsgemäß)

In den Spaltreaktor nach Beispiel 1 werden bei 140°C Sumpftemperatur und 90°C Kopftemperatur bei 0,15 MPa (abs.) am Kolonnenkopf bei einer Rücklaufmenge von 700 l/h 1000 kg/h eines Gemisches aus 11 % Dimethyldichlorsilan, 5,6 % Mittelsieder (Siedebereich 75-145°C), 5,6 % Tetramethyldichlorsilan, 38,9 % Trimethyltrichlordisilan und 38,9 % Dimethyltetrachlordisilan eingespeist. Dem Reaktor wurden zuvor 50 kg Tributylamin zugesetzt. HCl-Gas wird so zudosiert, daß eine geringe Abgasmenge entsteht, ca. 130 kg/h. Als Destillat werden 1130 kg/h Spaltsilan mit 38 % Methyldichlorsilan, 30 % Dimethyldichlorsilan, 23 % Methyltrichlorsilan, 4,5 % Mittelsieder und 4,5 % Tetramethyldichlordisilan erhalten. Der Stand in dem Reaktor bleibt konstant, der Versuch kann kontinuierlich fortgeführt werden.

## Patentansprüche

1. Verfahren zur Gewinnung von Methylchlorsilanen aus hochsiedenden Rückständen der Methylchlorsilansynthese, wobei in den Rückständen vorhandene spaltbare Methylchlordisilane, welche mindestens zwei Chloratome an einem Siliciumatom aufweisen, mit Chlorwasserstoff in Gegenwart eines im Reaktionsgemisch verbleibenden Katalysators gespalten werden, wobei die Spaltung der Methylchlordisilane in Gegenwart der leichter als die spaltbaren Methylchlordisilane flüchtigen Nebenprodukte der hochsiedenden Rückstände der Methylchlorsilansynthese, die einen Siedepunkt von mindestens 70°C bei Normalbedingungen aufweisen, abläuft und wobei die leichterflüchtigen Nebenprodukte kontinuierlich zusammen mit den Methylchlorsilanen und den nicht spaltbaren Methylchlordisilanen aus dem Reaktionsgemisch entfernt werden, dadurch gekennzeichnet, daß alle schwerer als die spaltbaren Methylchlordisilane siedenden Verbindungen vor der Spaltung abgetrennt werden und daß die Spaltung kontinuierlich erfolgt.

2. Verfahren nach Anspruch 1, **dadurch gekennzeichnet,** daß als Kalysator ein tertiäres Amin eingesetzt wird.

## Claims

1. Process for recovering methylchlorosilanes from high boiling residues of methylchlorosilane synthesis by cleaving cleavable methylchlorodisilanes which are present in the residues and which have at least two chlorine atoms attached to one silicon atom with hydrogen chloride in the presence of a catalyst which remains in the reaction mixture, cleaving the methylchlorodisilanes in the presence of the more volatile (than the cleavable methylchlorodisilanes) by-products in the high boiling residues of methylchlorosilane synthesis which have a boiling point of at least 70°C under normal conditions and continuously removing the more volatile by-products from the reaction mixture together with the methylchlorosilanes and the noncleavable methylchlorodisilanes, characterized in that all the compounds which are higher boiling than the cleavable methylchlorodisilanes are removed prior to the cleavage process and in that the cleavage process is effected continuously.

2. Process according to Claim 1, characterized in that the catalyst used is a tertiary amine.

## Revendications

1. Procédé de récupération de méthylchlorosilanes à partir de résidus à point d'ébullition élevé de la synthèse de méthylchlorosilanes, dans lequel des méthylchlorodisilanes clivables présents dans les résidus et qui renferment au moins deux atomes de chlore sur un atome de silicium sont clivés avec de l'acide chlorhydrique en présence d'un catalyseur restant dans le mélange réactionnel, dans lequel le clivage des méthylchlorodisilanes se fait en présence des produits secondaires volatils des résidus à point d'ébullition élevé de la synthèse de méthylchlorosilanes, qui sont plus légers que les méthylchlorodisilanes clivables et qui présentent un point d'ébullition d'au moins 70°C dans des conditions normales, et dans lequel les produits secondaires volatils sont éliminés en continu du mélange réactionnel conjointement avec les méthylchlorosilanes et les méthylchlorodisilanes non clivables, caractérisé en ce que tous les composés à point d'ébullition supérieur à celui des méthylchloro-disilanes clivables sont séparés avant le clivage et en ce que le clivage a lieu en continu.

2. Procédé selon la revendication 1, caractérisé en ce que l'on utilise une amine tertiaire en tant que catalyseur.
